# EUROPEAN PATENT APPLICATION

(11) **EP 1 203 947 A2**
(43) Date of publication of application: **08.05.2002**
(21) Application number: 01309372.9
(22) Date of filing: 06.11.2001
(51) Int. Cl.: G01N 21/956

(54) **Pattern detection, processing and testing apparatus**

(30) Priority: 06.11.2000 JP 2000338215; 23.03.2001 JP 2001084989
(71) Applicant: Kabushiki Kaisha Toshiba, Tokyo 105-8001 (JP)
(72) Inventor: Shiratsuchi, Masataka, c/o K.K. Toshiba, Tokyo 105-8001 (JP); Honguh, Yoshinori, c/o K.K. Toshiba, Tokyo 105-8001 (JP); Saito, Tsutomu, c/o K.K. Toshiba, Tokyo 105-8001 (JP); Ikari, Seiji, c/o K.K. Toshiba, Tokyo 105-8001 (JP)
(74) Representative: Granleese, Rhian Jane

(57) **Abstract**

A pattern (Q) detecting apparatus (100) is provided with an illuminating device (200) which separates a detected surface into a plurality of irradiation areas and irradiates an irradiation light to adjacent irradiation areas (Wa, Wb) from different directions, an imaging device (400) which overlaps and images the irradiation areas (Wa, Wb) with a mask generating a moire, and an image processing device (500) which detects a phase difference of a concentration change of the moire image in the irradiation areas (Wa, Wb) when the moire image is obtained by the imaging device (400), thereby judging whether or not a pattern exists.

## Description

The present invention relates to a pattern detecting apparatus detecting whether or not a pattern exists on a surface to be detected, and a pattern detection processing apparatus such as a defect testing apparatus of a shadow pattern in a color Braun tube, a testing apparatus of a master pattern in an IC, a quality control apparatus of a concavity and convexity texture and the like, and more particularly relates to a structure capable of detecting a fine pattern. Further, the present invention relates to a pattern detecting apparatus judging whether or not a pattern is good, by detecting whether or not a fine pattern exists on a surface to be detected. Further, the present invention relates to a testing apparatus capable of applying a high-precision test to a sheet-like subject to be tested.

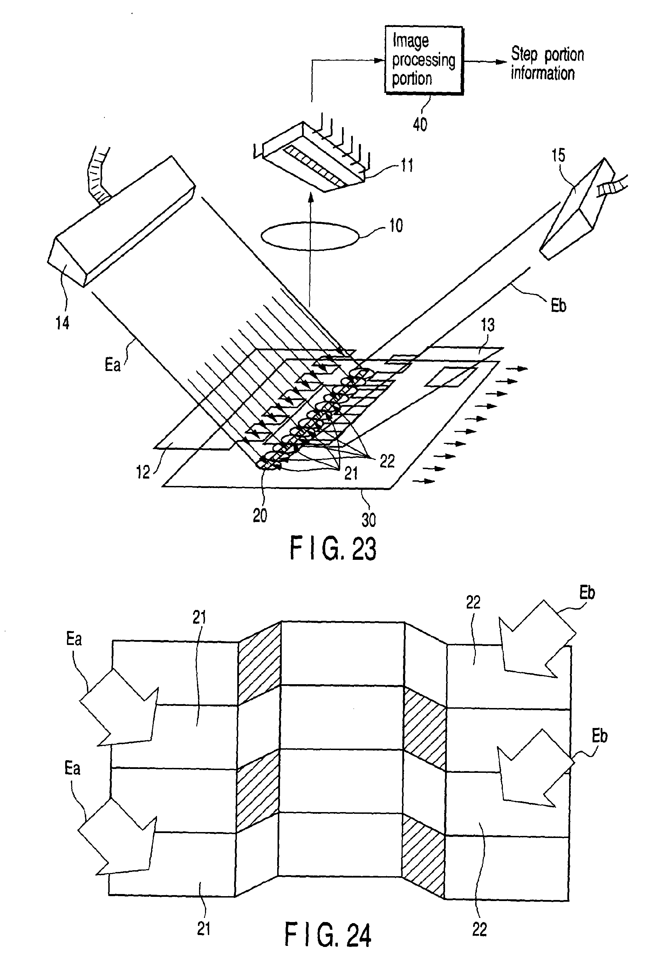

A step detecting apparatus is used for detecting a fine step existing on a surface (a surface to be detected) of a detected body such as a plate-like body, a sheet or the like. For example, in Jpn. Pat. Appln. KOKAI Publication No. 11-153411, there is disclosed a method of generating a characteristic pattern like a broken line on an edge of a mail address label or the like by applying a space modulation to an illumination light. FIG. 23 is a schematic view showing a detecting principle of the step detecting apparatus mentioned above. That is, an imaging area 20 of a line image sensor 11 by an image forming lens 10 is sectioned into short areas 21 and 22 by using slits 12 and 13, uneven numbers of areas among the areas 21 and 22, and even numbers of areas are respectively lit by illumination beams Ea and Eb using illumination apparatuses 14 and 15. A detected body 30 is transferred in a direction of an arrow in the drawing below the imaging area 20 of the line image sensor 11. Accordingly, a characteristic pattern like a broken line (a hatched portion in the drawing) is generated only in a step portion such as an edge of a mail address label or the like, as shown in FIG. 24, and it is possible to detect the existence of the step by an image processing portion 40.

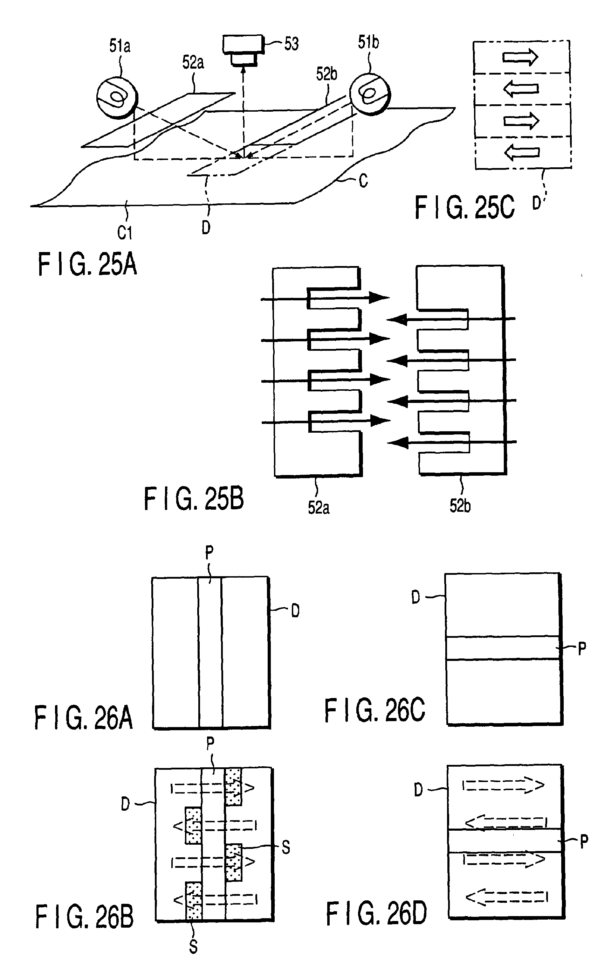

In order to detect whether or not a fine concave-convex pattern P formed on a detected surface C1 of a sheet C such as a paper or the like exists, various kinds of methods have been conventionally employed. FIGS. 25A to 25C are views showing an embodiment thereof. That is, a light beam is irradiated onto a detected area D by a pair of illumination portions 51a and 51b arranged so as to face to each other from left and right oblique portions. A pair of slits 52a and 52b formed in a comb shape are arranged between the respective illumination portions 51a and 51b and the detected area D. Since the pair of slits 52a and 52b have shapes in which a light passing portion and a light shielding portion are different in each of the left and right sides as shown in FIG. 25B, the slits are separated into a plurality of small areas having different irradiating directions on the detected area D, as shown in FIG. 25C. The detected area D is imaged by an imaging portion 53 such as a CCD camera or the like, and reflected light from the detected area D is converted into an electric signal. If the pattern P exists within the detected area D, a bright line or a shadow is generated in front and at the back of the pattern P, and this is used to detect whether or not a pattern P exists.

Further, as disclosed in Jpn. Pat. Appln. KOKAI Publication No. 11-179288, a number of illumination beams having different wavelengths are respectively irradiated onto a subject from different directions, and are separated by a color separating means for branching the reflected light of different wavelengths, for example, by a dichroic mirror, and respective images are obtained by a plurality of imaging means. Accordingly, bright lines and shadows are generated in front and at the back of the concavity and convexity portions in correspondence to the irradiating direction of light of different wavelengths, and are detected to judge whether or not a concavity or convexity exists.

On the contrary, in a detecting apparatus imaging the sheet C so as to detect some physical component, in the case of transferring the sheet C, the sheet C is flat on a reading surface of the detecting apparatus.

In the case of a large step of about 100 µm, such as the address label, the conventional step detecting method mentioned above can detect it even by an image sensor having a low resolution. However, in the case of detecting whether or not a pattern in which smaller steps are in close formation exists, an image sensor having a high resolution is required. Further, when using the image sensor having a high resolution, a lot of time is required for testing and processing, and it is impossible to execute an effective detection.

In the case of separating the illumination light into small areas by use of the pattern detecting method mentioned above, a means for separating the light into areas, for example, a comb type slit is required. Further, as shown in FIG. 26A, in the case the pattern P is formed in a vertical direction, that is, a direction crossing a light irradiating direction, an image thereof has a pattern as shown in FIG. 26B, and a shadow S is generated at each of the small areas having different irradiating directions. On the basis of the shadow S, the pattern P can be detected.

However, as shown in FIG. 26C, in the case that the pattern P is formed in a lateral direction, that is, the same direction as the light irradiating direction, the image has a pattern shown in FIG. 26D, and no shadow is generated. In a method of separating the illumination light into small areas as mentioned above, there has been a problem that it is impossible to detect in some shaped of the pattern P.

Further, in the case of the method of executing color separation, a plurality of imaging means corresponding to the kind of illumination are required, thus the structure of the apparatus becomes large and complex. Further, in some combinations of the light irradiating directions, there is a case that the pattern cannot be detected in correspondence to the irradiating direction.

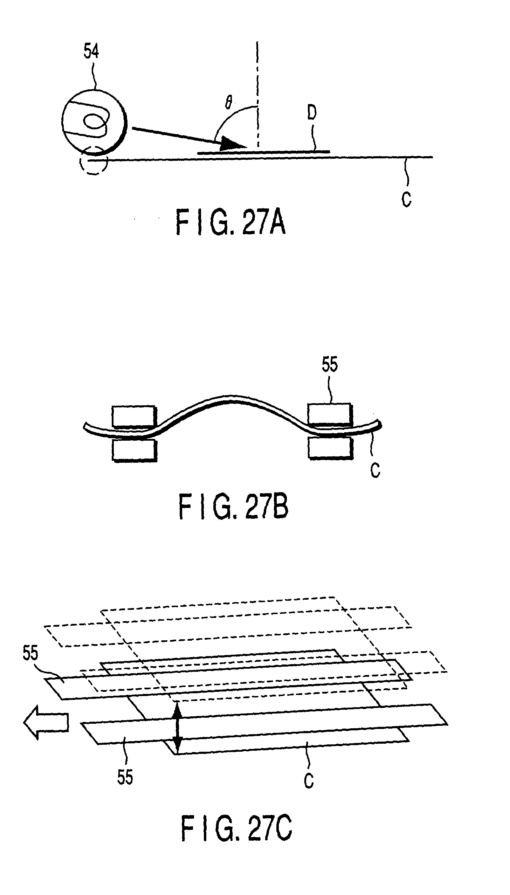

FIG. 27A is a schematic view showing a positional relation between the sheet C and an illumination portion 54. In the case of using the illumination portion 54 being obliquely incident with respect to the sheet C, in order to increase a measuring accuracy, a fixed angle θ is necessary as the incident angle. However, when increasing the angle θ, the sheet C and the illumination portion 54 structurally interfere, and it is hard to arrange the illumination portion 54.

FIG. 27B is a schematic view of the sheet C transferred by a transfer system 55 constituted by a transfer belt as seen from a transfer direction thereof, and FIG. 27C is a schematic view as seen from an oblique direction. As shown in FIG. 27B, the sheet C tends to bend on being transferred, and as shown in FIG. 27C, there is a case that the sheet C flip-flops in the middle of being transferred and moves away from a reference position in a thickness direction of the sheet C as shown by a broken line in the drawing. These phenomena become significant particularly when high-speed transfer is executed. Since the accuracy of a test is affected by a change in the distance between the sheet C and the imaging portion, the transfer system mentioned above is not preferable.

Particularly, in the case of oblique illumination having a large incident angle, since the characteristics such as the irradiating direction of the sheet C and an illumination intensity are largely affected by the change in the thickness direction, it becomes important to stably position the sheet C in a reference testing position.

Accordingly, an object of the present invention is to detect a pattern by an image sensor having a low resolution.

One example in accordance with the present invention is provided with an illumination device which irradiates an irradiation light to a plurality of irradiation areas separated from the detected surface, the irradiation light being irradiated to adjacent irradiation areas from different directions, an imaging device which images the irradiation areas with a mask having a predetermined pattern, and an image processing device which detects a concentration change of a moire image obtained by the imaging device, detects a phase difference of the concentration change of the moire image in the adjacent irradiation areas, and judges whether or not the pattern exists.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic view showing a summary of a pattern detecting apparatus in accordance with a first embodiment of the present invention;
FIG. 2 is a schematic view showing an irradiation area applied by the pattern detecting apparatus;
FIG. 3 is a schematic view showing a detection principle applied by the pattern detecting apparatus;
FIG. 4 is a schematic view showing a detection principle applied by the pattern detecting apparatus;
FIGS. 5A and 5B are schematic views showing a detection principle applied by the pattern detecting apparatus;
FIG. 6 is a schematic view showing a phase of concentration change of a moire image applied by the pattern detecting apparatus;
FIG. 7 is a schematic view showing a modified example of the pattern detecting apparatus;
FIG. 8 is a schematic view showing another modified example of the pattern detecting apparatus;
FIG. 9 is a schematic view showing a summary of a pattern detecting apparatus in accordance with a third embodiment of the present invention;
FIG. 10 is a schematic view showing a summary of a pattern detection processing apparatus in accordance with a fourth embodiment of the present invention;
FIG. 11 is a block diagram showing a schematic structure of the whole of a pattern testing apparatus in accordance with a first embodiment of the present invention;
FIGS. 12A and 12B are schematic views showing a summary of a measuring method of the pattern testing apparatus;
FIGS. 13A and 13B are schematic views showing a CCD line sensor assembled in the pattern testing apparatus;
FIGS. 14A and 14B are schematic views showing a summary of a transfer mechanism assembled in the pattern testing apparatus;
FIG. 15 is a schematic view showing a test principle applied by the pattern testing apparatus;
FIGS. 16A to 16C are schematic views showing a test principle applied by the pattern testing apparatus;
FIGS. 17A to 17D are schematic views showing a test principle applied by the pattern testing apparatus;
FIGS. 18A to 18D are schematic views showing a test principle applied by the pattern testing apparatus;
FIGS. 19A and 19B are schematic views showing a detection principle of a pattern detecting apparatus in accordance with a second embodiment of the present invention;
FIGS. 20A and 20B are schematic views showing a detection principle of the pattern detecting apparatus;
FIG. 21A is a block diagram showing a schematic structure of a pattern testing apparatus in accordance with a third embodiment of the present invention;
FIG. 21B is a schematic view showing a test principle of the pattern testing apparatus;
FIGS. 22A to 22E are schematic views showing a detection principle of the pattern testing apparatus;
FIG. 23 is a schematic view showing a summary of a conventional step detecting apparatus;
FIG. 24 is a schematic view showing a detection principle applied by the step detecting apparatus;
FIGS. 25A to 25C are views showing one example of a conventional pattern testing apparatus;
FIGS. 26A to 26D are schematic views showing a problem of the pattern testing apparatus; and
FIGS. 27A to 27C are schematic views showing another problem of the pattern testing apparatus.

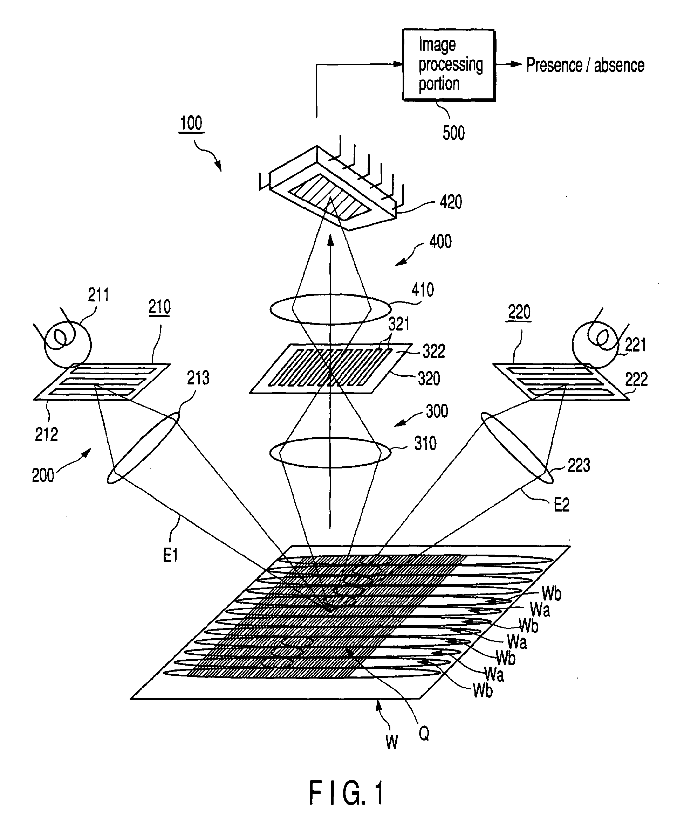

FIG. 1 is a schematic structure of the whole pattern detecting apparatus 100 in accordance with a first embodiment of the present invention. The pattern detecting apparatus 100 is structured such as to detect whether or not a pattern Q constituted by vertical stripes having a pitch between 100 and 300 µm exists on a detected surface W. In this case, the pattern Q provided on the detected surface W has a dark color in a convex portion X and a reduced shade in a recess portion Y. In this case, the convex portion X may be black and the recess portion Y may be white, or the convex portion X may be opaque and the recess portion may be transparent. Further, the relation between the convex portion X and the recess portion Y may be inverted.

The pattern detecting apparatus 100 is provided with an illumination portion 200 irradiating illumination beams (illumination light) E1 and E2 with respect to the detected surface W from both left and right directions at a predetermined incident angle (for example, 45 degrees), a mask portion 300 for overlapping a predetermined mask pattern (a reference pattern) over an image on the detected surface W, an imaging portion 400 imaging the image from the detected surface W passing through the mask portion 300, and an image processing portion 500 processing the image imaged by the imaging portion 400 and judging whether or not a pattern Q having a predetermined pitch Qp exists.

The illumination portion 200 is provided with a pair of illumination apparatuses 210 and 220 respectively emitting a multiplicity of parallel illumination beams E1 and E2 having a uniform interval. The illumination apparatus 210 is provided with a light source 211 obliquely illuminating the detected surface W from a left side, a slit 212 having a through hole with a horizontal slit pattern formed in a direction vertical to a vertical stripe pattern of the pattern Q, and a projection image forming system 213 which projects the pattern of the slits 212 onto the detected surface W. Further, the illumination apparatus 220 is provided with a light source 221 obliquely illuminating from a right side, a slit 222 formed in a horizontal stripe shape and a projection image forming system 223 which projects a pattern of the horizontal slits 222 onto the detected surface W.

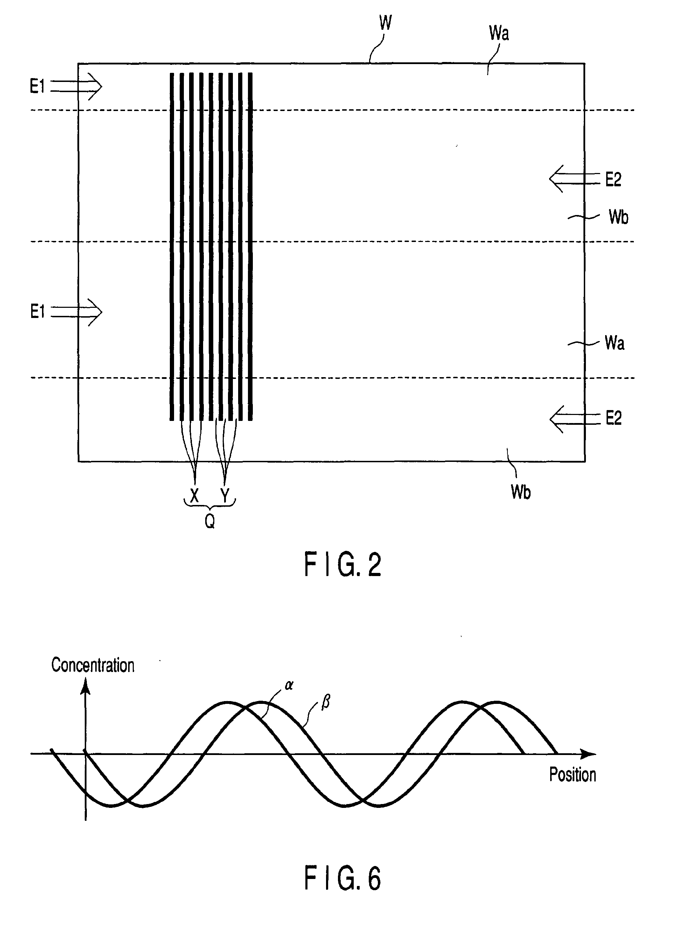

At this time, by setting the relative positional between the slit 212 and the slit 222, an area on the detected surface W can be separated into small areas Wa and Wb formed in horizontal stripes as shown in FIG. 2. In this case, the respective small areas Wa and Wb alternately form an area Wa on which only the illumination beam E1 from the illumination apparatus 210 is irradiated, and an area Wb on which only the illumination beam E2 from the illumination apparatus 220 is irradiated.

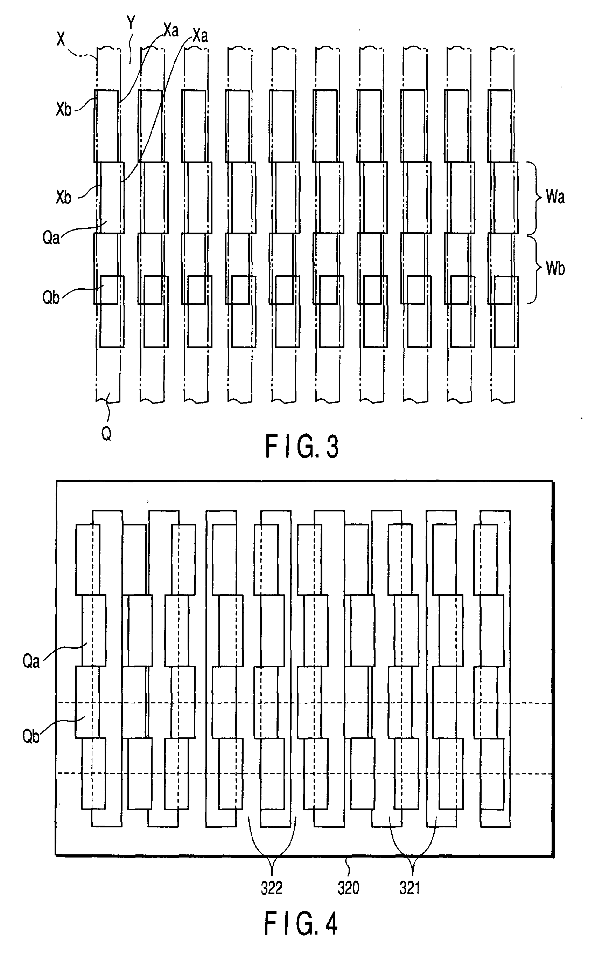

The mask portion 300 is provided with an image-forming lens 310 forming an image of the detected surface W, and a mask 320 having a pattern constituted by a permeable portion 321 formed of vertical stripes and placed on the image-forming surface by the image forming lens 310 and an impermeable portion 322. A pitch φ of the mask 320 is slightly shifted from a pitch Qp of the pattern Q to be detected in the manner mentioned below, as shown in FIG. 4, and is set to a value by which a moire is easily generated.

The imaging portion 400 is provided with an image-forming lens 410 forming an image appearing on the mask 320 on a CCD area image sensor 420, and the CCD image sensor 420. The image processing portion 500 processes the image obtained by the CCD area image sensor 420 and judges whether or not a pattern Q exists on the detected surface W.

In the pattern detecting apparatus 100 structured in the manner mentioned above, it is detected in the following manner whether or not a pattern Q exists on the detected surface W. At first, the illumination beam E1 and the illumination beam E2 are respectively irradiated onto the area Wa and the area Wb of the detected surface W, by the illumination portion 200.

As shown in FIG. 3, an edge Xa close to an incident side of the illumination beam E1 among the convex portions X of the pattern P in the area Wa appears white as seen from directly above because the incident illumination beam E1 is scattered. On the contrary, an edge Xb in an opposite side to the incident side of the illumination beam E1 appears black because a shadow is generated due to a protrusion of the pattern Q. Accordingly, in the case of obliquely illuminating the convex portion X of the pattern Q, the portion appearing black appears in such a manner as to slightly move to the opposite side to the incident side of the illumination light from the position at which an original convex portion X exists. Accordingly, in the case that a pattern Q corresponding to a subject to be detected exists on the detected surface W, a black and white stripe pattern in the portion illuminated from the left side of the pattern forms a pattern Qa slightly shifted rightward.

On the contrary, in the area Wb, a black and white stripe pattern in the area illuminated from the right direction forms a pattern Qb slightly shifted leftward due to the same reason. Here, in the case that the pattern Q does not exist and in the case that only the black and white stripe pattern exists in a plane manner, the phenomenon is not generated.

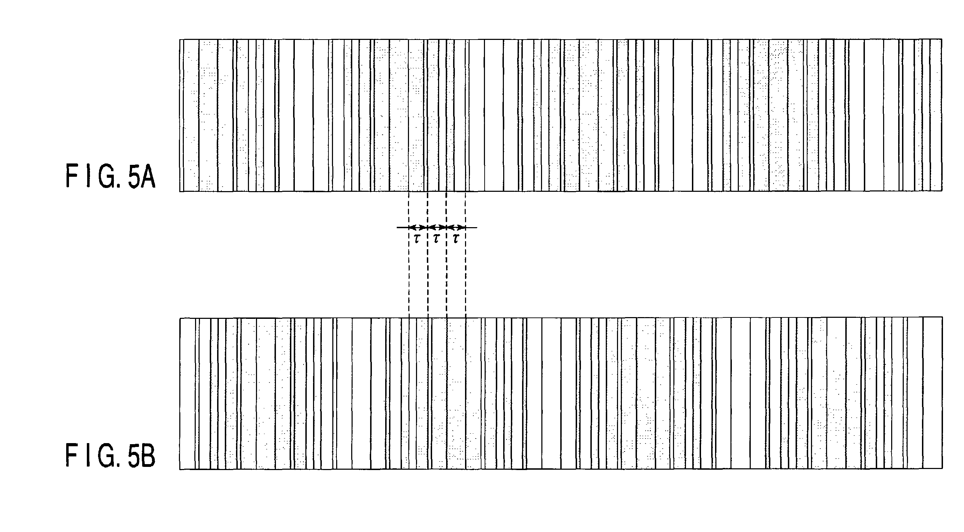

Next, an image of the detected surface W is formed on the mask 320 via the image-forming lens 310. The mask 320 is engaged with the images of the pattern Qa and Qb shifted in a certain direction as shown in FIG. 4. Accordingly, the image of the portion passing through the permeable portion 321 forms an image in which a white portion and a black portion coexist or showing any one of them. By removing the components corresponding to the impermeable portion 322 and then combining these images, it is possible to obtain an image in which a brightness periodically changes, as shown in FIGS. 5A and 5B. In this case, FIG. 5A shows the area Wa and FIG. 5B shows the area Wb, and reference symbol τ in FIG. 5 denotes a width of the permeable portion 321. This image corresponds to moire images α and β in which a moire is generated due to an interference between the mask 320 and the images of the pattern Qa and Qb. That is, it is possible to obtain an image in which short and long widths are generated in the pattern, and when observing a change of the pattern width along a fixed length, a concentration change is generated between a deep color portion and a reduced shade portion, and a predetermined cycle is generated.

FIG. 6 shows a phase of the concentration change of the moire image on the area Wa and the area Wb. Due to a slight position shift of the pattern to a right side or a left side mentioned above, the phase of the concentration change of the moire image becomes largely different.

The moire images α and β are input to the CCD image sensor 420 via the image forming lens 410. In this case, a phase difference of the moire is detected on the basis of the moire image α and the moire image β. In the case that the phase difference between the moire image α and the moire image β is over a predetermined value, a pattern Q exists, and when it is equal to or less than the predetermined value, a pattern Q does not exist.

In this case, since a resolution required in the CCD image sensor 420 is a degree capable of detecting the phase difference between the moire images α and β, it becomes, for example, about one fourth of the cycle of the moire images α and β. That is, it becomes sufficiently larger than the cycle of the mask 320 and the cycle of the pattern Q.

Next, a description will be given of a method of setting the cycle of the mask 320. A case that the cycle of the pattern Q is 2P and the cycle of the mask is 2kP is assumed. If the value k is close to 1 in comparison with the property of the moire phenomenon, the moire phenomenon is easily generated. If only a front half portion of the mask cycle 2kP is taken in the imaging portion 400 or the front half portion and a rear half portion are separately taken in different cameras so as to obtain the difference, it is possible to obtain a smooth graph showing the concentration change of the moire images α and β, as shown in FIG. 6.

A cycle H of the graph becomes about 2kP/|1 - k|. 1/|1 - k| cycles of patterns of the mask 320 are included in the cycle of 2kP/|1 - k|. In order to read the phase of the concentration change of the moire images α and β on the basis of a resolving power equal to or more than 90 degrees, it is desirable that four cycles or more of patterns of the mask 320 are included within one cycle of the pattern Q, so that is it necessary to satisfy a relation 1/|1 - k| ≧ 4. Accordingly, it is known that the conditions 0.75 ≦ k ≦ 1.25 should be established. Therefore, it is desirable that the cycle of the pattern of the mask 320 is 0.75 times or more of the pattern Q and 1.25 times or less of the pattern Q.

Here, in the case that in place of the pattern Q, for example, the black and white vertical stripe lines are simply irradiated onto the detected surface W in a plane manner, the shift due to the illumination beams E1 and E2 is not generated in the areas Wa and Wb, and no phase difference is generated in the moire images α and β in the areas Wa and Wb.

Accordingly, in the image processing portion 500, if the phase difference of the cycle between two kinds of moire images α and β is over a predetermined value, it is judged that a pattern Q exists, and if the phase difference is equal to or less than the predetermined value, it is judged that a pattern Q does not exist.

Here, a description will be given of the relationship between the shift amount of the pattern Q and the phase difference thereof by way of a particular example. In the case that the difference in height between the height of the concave or convex portion is 40 µm and a width of one pattern is 150 µm, a lateral shift amount is about 40 µm. The phase difference of the moire concentration change at this time becomes several times to several tens times of the width of the pattern. Accordingly, the resolution required of the CCD image sensor 420 is from several hundreds µm to 1 mm.

As mentioned above, in accordance with the pattern detecting apparatus 100 of the first embodiment, the moire image due to the moire phenomenon is generated and the phase difference of the concentration change is detected by utilizing the fact that the pattern itself appears in such a manner as to be slightly laterally shifted, due to the shadow and the bright lines generated at the edges Xa and Xb of the convex portion X when obliquely illuminating the pattern Q from the right side or the left side, whereby it is possible to judge whether or not the pattern Q exists. At this time, since the phase difference becomes sufficiently larger than the shift amount, it is possible to judge whether or not the pattern Q exists, even in an CCD image sensor 420 having a low resolution which cannot directly detect the change of pattern Q and the shift amount.

In this case, it is possible to recognize the scattering and the shadow of the illumination light by observing the step portion of the concavity and convexity in detail, however, it is necessary to pick up the image at a very high resolution and apply the image process thereto. The image pick-up at a high resolution indispensably requires a strong light source corresponding thereto. In accordance with the judging method using the moire phenomenon, it is possible to judge the position shift at a high accuracy even in the case that the image is picked up at a low resolution, thereby making it possible to securely judge whether or not the pattern exists.

### (Second embodiment)

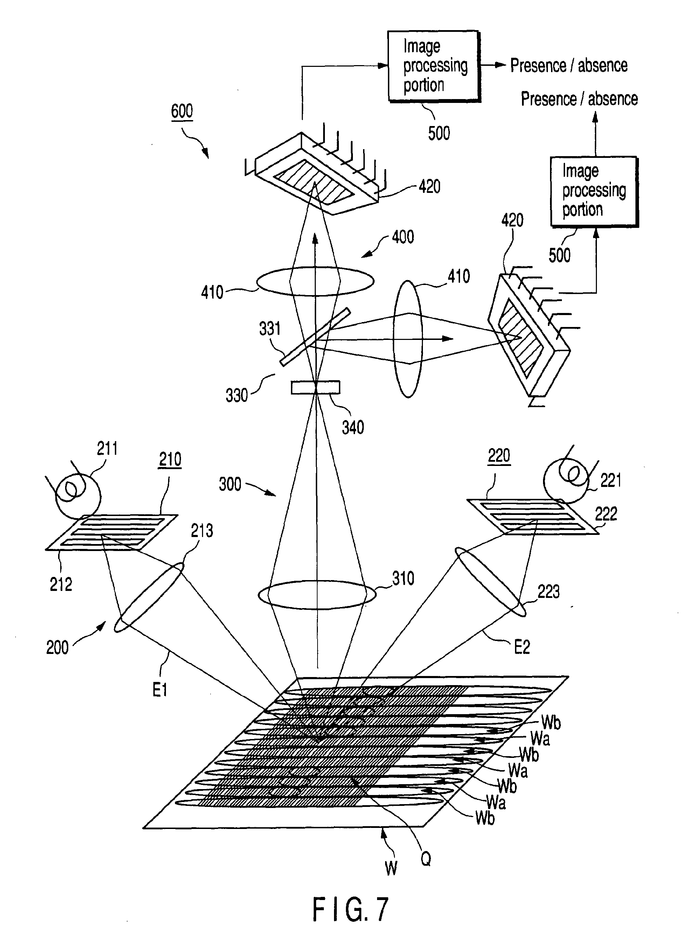

FIG. 7 is a view showing the whole structure of a pattern detecting apparatus 600 detecting whether or not a pattern Q exists on a detected surface W in accordance with a second embodiment of the present invention. In this case, in FIG. 7, the same reference numerals are attached to the same functional portions as those in FIG. 1, and a detailed description will be omitted.

The pattern detecting apparatus 600 is provided with an illumination portion 200 irradiating illumination beams E1 and E2 with respect to the detected surface W from both left and right directions at a predetermined incident angle, a mask portion 330 for separating an image from the detected surface W and applying a predetermined mask pattern, a pair of imaging portions 400 imaging the image from the detected surface W passing through the mask portion 330, and an image processing portion 500.

The mask portion 330 is provided with an image forming lens 310 forming an image of the detected surface W, a mask 340 having a pattern constituted by a permeable portion 341 formed of vertical stripes and placed on the image forming surface by the image forming lens 310 and an impermeable portion 342, and a half mirror 331 to which the light passing through the mask 340 is input. The light passing through the half mirror 331 is input to CCD area image sensors 420 by image forming lenses 410. Further, the light reflected by the half mirror 331 is input to the CCD area image sensors 420 by the image forming lenses 410.

In accordance with the pattern detecting apparatus 600 of the second embodiment, since the image is introduced to two CCD area image sensors 420 and 420 and the difference between two picked up images is employed, the phase difference of the concentration change in the moire image can be measured more accurately in comparison with the pattern detecting apparatus 100 mentioned above.

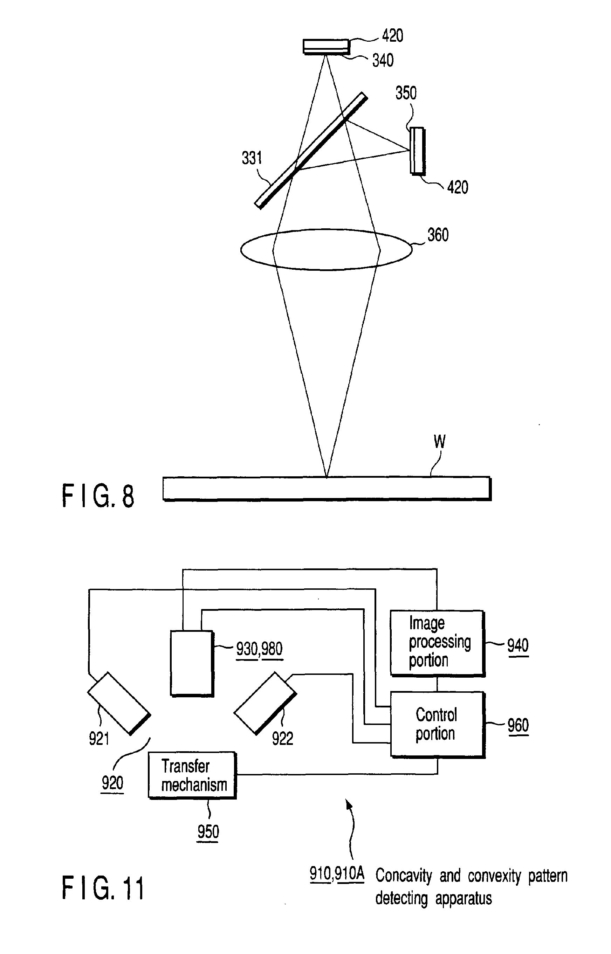

FIG. 8 is a view showing a modified example of the pattern detecting apparatus 600. In this case, in FIG. 8, the same reference numerals are attached to the same functional portions as those in FIG. 1, and a detailed description thereof will be omitted.

In accordance with the present modified example, there are provided an image forming lens 360 for forming an image of the detected surface W on the CCD area image sensor 420 and a half mirror 331 arranged in the middle of an optical path, and the light passing through the half mirror 331 is input to the CCD area image sensor 420. Further, the light reflected by the half mirror 331 is input to the CCD area image sensor 420. In this case, masks 340 and 350 are arranged on an input surface of the CCD area image sensor 420.

A pitch of the masks 340 and 350 is slightly shifted from the pitch of the pattern of the subject to be detected as mentioned below, and is set to a value easily generating the moire. Further, the image passing through the mask 340 is set so as not to pass through the mask 350, and the image passing through the mask 350 is set so as not to pass through the mask 340.

In accordance with the present modified example, it is also possible to obtain the same effect as that of the pattern detecting apparatus 600.

### (Third embodiment)

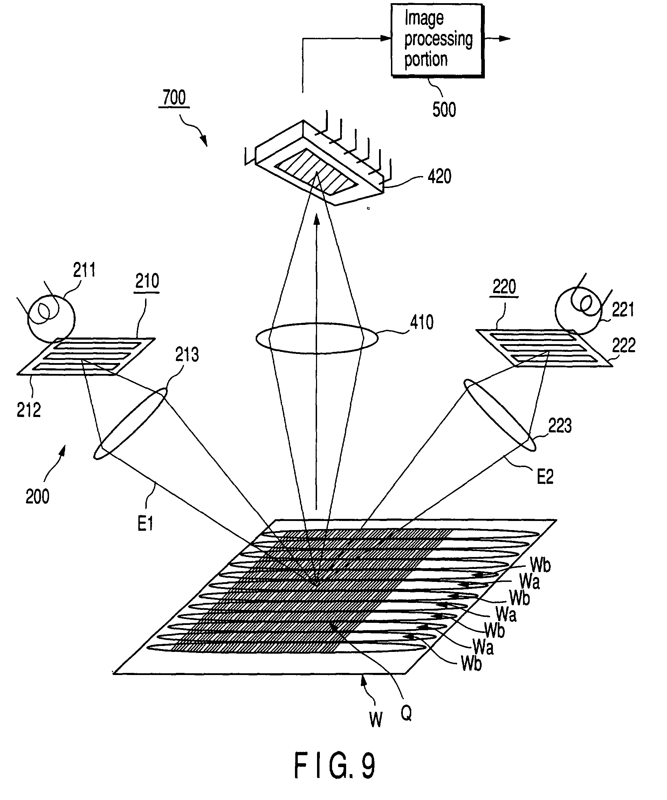

FIG. 9 is a view showing the whole structure of a pattern detecting apparatus 700 detecting whether or not a pattern Q exists on a detected surface W in accordance with a second embodiment of the present invention. In this case, in FIG. 9, the same reference numerals are attached to the same functional portions as those in FIG. 1, and a detailed description will be omitted.

The pattern detecting apparatus 700 is provided with an illumination portion 200, an imaging portion 400 and an image-processing portion 500.

The imaging portion 400 is constituted by an image-forming lens 410 forming an image appearing on the image-forming surface 320 on a CCD area image sensor 420, and the CCD area image sensor 420. A pixels pitch in a horizontal direction of the CCD area image sensor 420 has a size slightly shifted from a half of the pattern Q, and is set in a state of easily generating the moire phenomenon on the basis of the pattern Q.

The image processing portion 500 judges on the basis of the image obtained by the CCD area image sensor 420 whether or not a predetermined pattern exists on the detected surface W.

In the pattern detecting apparatus 700 structured in the manner mentioned above, the pattern Q is detected in the following manner. That is, in the same manner as that of the pattern detecting apparatus 100 mentioned above, if a pattern Q exists on the areas Wa and Wb, the convex portion X is shifted and patterns Qa and Qb are respectively generated in the areas Wa and Wb.

On the contrary, if the pixels pitch of the CCD area image sensor 420 is suitably set, it becomes in the same state that only the image passing through the mask 320 in the pattern detecting apparatus 100 in accordance with the first embodiment is detected by the CCD area image sensor 420, and the moire images α and β due to the moire phenomenon can be obtained. Accordingly, by detecting the phase difference of the concentration change between the moire images α and β, it is possible to judge whether or not the pattern Q exists on the detected surface W.

In this case, the phase difference of the concentration change between the moire images α and β can be easily known by subtracting the value of the even number of pixels from the value of the adjacent uneven number of pixels in one horizontally connected line, or the like. It is desirable that the pixels pitch of the CCD area image sensor 420 is equal to or more than 0.375 times the cycle of the pattern and equal to or less than 0.625 times.

A description will be given of the reason thereof. That is, when reading the pattern Q having a cycle 2P by a sensor having a pixels pitch kP, the moire phenomenon is easily generated in the read-out image if k is a value close to 1. When reading the pixels with skipping one pixels or subtracting the value of the even number of pixels from the value of the left side uneven number of pixels, it is possible to obtain a graph having a smooth concentration change.

This is a graph showing a change of the moire, however, a cycle thereof becomes about 2kP|1 - k|. When reading the pixels with skipping one pixels, the pixels pitch expands to 2kP. 1/|1 - k| number of pixels are included in the cycle of 2kP/|1 - k|. In order to read the phase of the concentration change of the moire image at a resolving power equal to or more than 90 degrees, four or more pixels are desirable in one cycle, and it is necessary to satisfy a relation 1/|1 - k| ≧ 4.

Accordingly, it is known that a relation 0.75 ≦ k ≦ 1.25 should be established. Therefore, it is required that the pixels pitch kP of the sensor is equal to or more than 0.375 times the pattern cycle 2P and equal to or less than 0.625 times thereof.

As mentioned above, in accordance with the pattern detecting apparatus 700 of the third embodiment, it is possible to obtain the same effect as that of the pattern detecting apparatus 100 in accordance with the first embodiment.

### (Fourth embodiment)

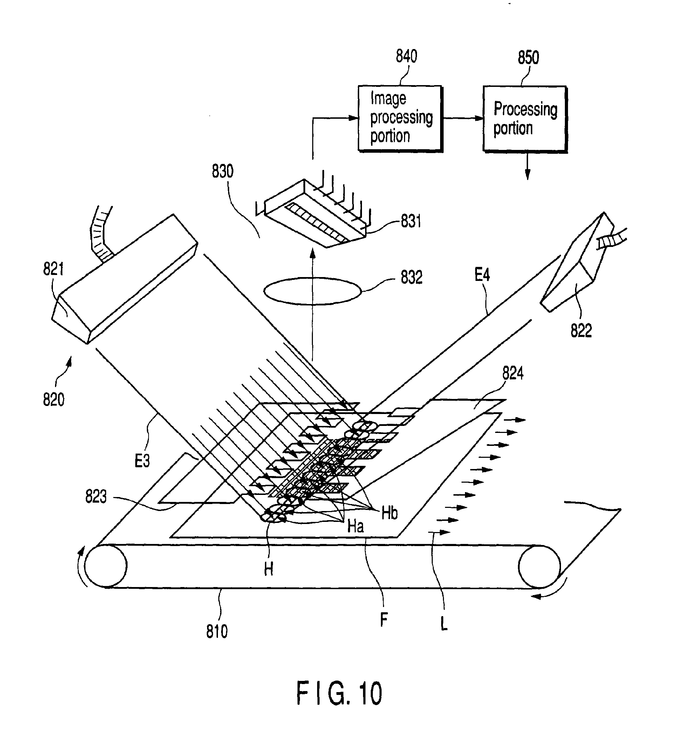

FIG. 10 shows a structure of a pattern detection processing apparatus 800 in accordance with a fourth embodiment of the present invention. In this case, in FIG. 10, the same reference numerals are attached to the same functional portions as those in FIG. 1, and a detailed description will be omitted.

The pattern detection processing apparatus 800 is constituted by a transfer apparatus 810, an illumination portion 820, an imaging portion 830, an image-processing portion 840 and a processing portion executing a next step process of a tested body F in accordance with whether or not the pattern Q exists.

The transfer apparatus 810 is structured such as to transfer the tested body F in the direction of the arrow L, and is set in such a manner as to pass the detected surface W of the tested body F through a reading area H of a CCD line image sensor 831 mentioned below.

The illumination portion 820 is structured such as to irradiate an illumination light with respect to the detected surface W from a left direction or a right direction at a large incident angle, and is constituted by a light source comprising a halogen lamp and line type light guides 821 and 822 and comb-shaped slits 823 and 824 placed immediately next to the detected surface W.

The imaging portion 830 is provided with the CCD line image sensor 831 and an image-forming lens 832 forming an image on the CCD line image sensor 831.

The detected surface W is transferred by the transfer apparatus 810. The reading area H of the CCD line image sensor on the detected surface W is separated into an area Ha illuminated from a left oblique upper portion by an illumination beam E3 from the left side light guide 821 corresponding to the comb-shaped slit, and an area Hb illuminated from a right oblique upper portion by an illumination beam E4 from an emitting port of the right side light guide 822.

A resolution in a sub-scanning direction on the areas Ha and Hb of the CCD line image sensor 831 becomes a magnitude slightly shifted from a half of the pitch of the pattern Q, and is set in a state that the moire phenomenon is easily generated by the pattern Q.

The image processing portion 840 judges on the basis of the moire images α and β obtained by the imaging portion 830 whether or not the pattern Q exists on the detected surface W.

In the pattern detecting apparatus 800 structured in the manner mentioned above, the pattern Q is detected in the following manner. That is, in the same manner as that of the pattern detecting apparatus 100 mentioned above, if the pattern Q exists on the areas Ha and Hb, the convex portion X is shifted, and respective patterns Qa and Qb are generated in the areas Ha and Hb.

On the contrary, if the resolution in the sub-scanning direction of the CCD line image sensor 831 is properly set, in the same manner as that of the pattern detecting apparatus 700 in accordance with the third embodiment mentioned above, the moire images α and β due to the moire phenomenon can be obtained. Accordingly, by detecting the phase difference of the concentration change between the moire images α and β, it is possible to judge whether or not the pattern of the subject to be detected on the detected surface W exists.

In this case, the phase difference of the concentration change between the moire images α and β can be easily known based on the comparison of values obtained by subtracting the value of the even number of pixels from the value of the adjacent uneven number of pixels, in one horizontally connected line, or the like. It is desirable that the resolution in the sub-scanning direction of the CCD area image sensor 831 is equal to or more than 0.375 times the cycle of the pattern and equal to or less than 0.625 times. The reason thereof is the same as the reason why the pixels pitch of the pattern detecting apparatus 700 is set.

As mentioned above, in accordance with the pattern detecting apparatus 800 of the fourth embodiment, it is possible to obtain the same effect as that of the pattern detecting apparatus 700 in accordance with the third embodiment.

In this case, as a modified example of the pattern detecting apparatus 800 in accordance with the fourth embodiment, a structure can be made such that a light and shade change detecting apparatus at a particular point is added and a read period-determining control signal (shift pulse) of the CCD line image sensor 831 is adjusted with reference to an output signal thereof so as to adjust a reading cycle in a transferring direction.

For example, a laser beam is applied to one point near the reading area H of the CCD line image sensor 831 and a reflected light thereof is received by a light detector. On the basis of the output, a signal component of a cycle which is considered to be close to the pattern of the subject to be detected is picked up by a band pass filter, and the shift pulse of the CCD line image sensor 831 is adjusted so that a cycle of the signal component and a cycle of the shift pulse of the CCD line image sensor 831 are slightly different. Accordingly, even when large fluctuations are generated due to differences in the body being tested, it is possible to stably generate the moire phenomenon so as to detect the pattern Q. Further, the structure may be made such that in place of adjusting the shift pulse of the CCD line image sensor 831, a transfer speed of the tested body may be adjusted.

In this case, the present invention is not limited to the first to fourth embodiments. That is, the pattern of the mask is not necessarily formed of vertical stripes, but may be constituted by two groups comprising a concentric circular and radial straight line group and an oblique crossing straight line group, or the like. In accordance with the structure mentioned above, not only the vertical stripe pattern, but also various patterns can be detected whether or not they exist.

Further, with respect to the illuminating direction, in addition to the structure obliquely illuminating from the right and left directions, a structure obliquely illuminating from directions having a slight skew angle, for example, left upper and right lower directions may be employed. In accordance with the structure mentioned above, not only with respect to the vertical stripe pattern, but also with respect to the horizontal pattern, a shadow is generated, and can be used for judging the pattern. Further, in place of the facing two directions, it is possible to obliquely illuminate from two non-facing directions, for example, left upper and right upper directions. In the case of the two facing directions, a shadow is not generated when the direction of the concavity and convexity stripe pattern is in parallel to a facing angle of the illumination light, whereby the existence of the concavity and convexity cannot be absolutely known, however, by illuminating from two non-facing directions, a shadow is always generated even when the pattern in any direction is present.

Further, the illuminating direction is not limited to the predetermined two directions, but may be two directions changing with time. For example, it is possible to employ a structure in which a facing angle of the illumination rotates with time when illuminating from two facing directions, a structure in which the facing angle is switched at a certain time interval, or the like. In accordance with the structure mentioned above, a shadow is always generated even when the concavity and convexity stripe pattern is present in any direction, thus a case where the sensitivity of detecting the pattern is too low does not occur.

Further, the illuminating direction is not limited to two directions, and may be three directions or more. In accordance with the structure mentioned above, a shadow is always generated even when the concavity and convexity stripe pattern in any direction exists, thus a case where the sensitivity of detecting the pattern is too low does not occur. In addition, it is of course possible that various modifications can be made within the scope of the present invention.

### (Fifth embodiment)

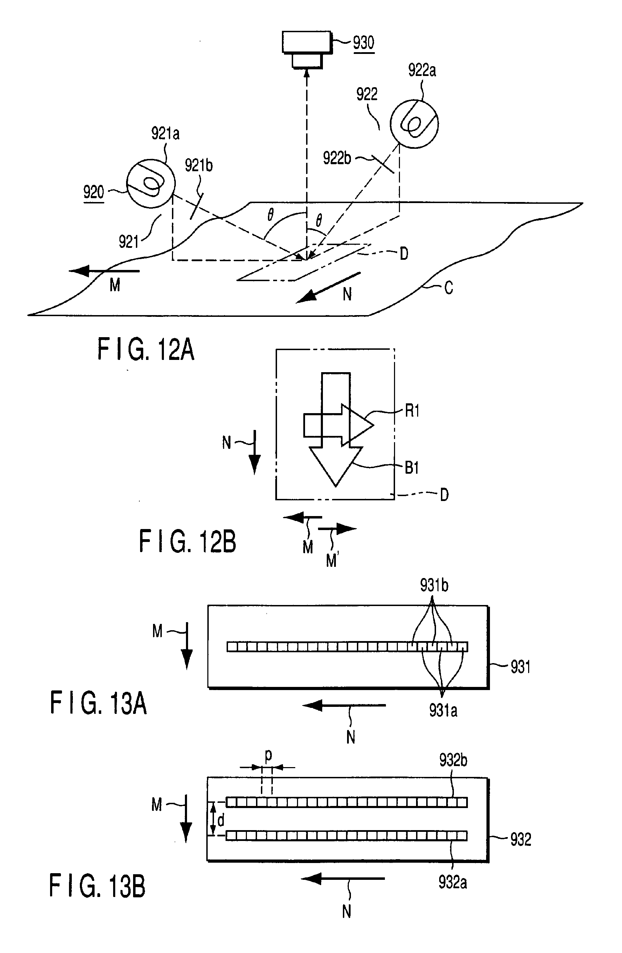

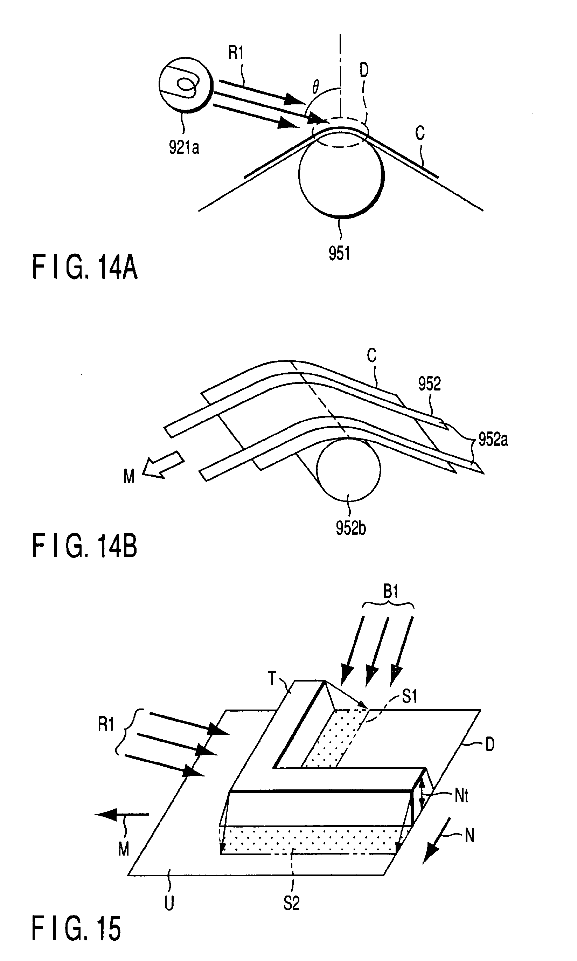

FIG. 11 is a block diagram showing a schematic structure of the whole pattern testing apparatus 910 in accordance with the first embodiment of the present invention, FIGS. 12A and 12B are schematic views showing a summary of a measuring method of the pattern testing apparatus 910, FIG. 13A is a bottom elevational view showing a CCD line sensor 931 assembled in the pattern testing apparatus 910, and FIG. 14 is a schematic view showing a main portion of a transfer mechanism 950 assembled in the pattern testing apparatus 910 and transferring a sheet C. In this case, in these drawings, reference symbol M denotes a transfer direction of the sheet C, reference symbol M' denotes a reverse transfer direction, and reference symbol N denotes a vertical direction vertically crossing the transfer direction M on a detected surface C1. Further, in the drawings, reference symbol D denotes a test area on the detected surface C1. Further, the sheet C has a flexible nature, for example, as in paper.

The pattern testing apparatus 910 is structured such as to detect whether or not a pattern P constituted by vertical stripes having a 100 to 300 µm pitch exists on the detected surface C1 of the sheet C corresponding to a subject to be tested. In this case, the pattern P provided on the detected surface C1 corresponds to a pattern in which convex portions T vertically cross each other in vertical and horizontal directions, a base portion U has a reduced color shade and shape, for example, white, and the convex portion T has a deep color, for example, black. In this case, the present invention is not limited to this, even when a deep color pattern is inserted in the base portion U or the convex portion T is a reduced shade, the concavity and convexity can be detected.

The pattern testing apparatus 910 is provided with an illumination portion 920 irradiating illumination light R1 and B1 to the detected surface C1 from the reverse transfer direction M' and the vertically crossing direction N at a predetermined incident angle (for example, 60 to 65 degrees), an imaging portion 930 imaging an image from the detected surface C1, an image processing portion processing the image imaged by the imaging portion 930 so as to judge whether or not a pattern P exists, a transfer mechanism 950 transferring the sheet C in a predetermined transfer direction, and a control portion 960 operating these portions in an interlocking manner.

As shown in FIG. 12A, the illumination portion 920 is provided with a pair of illuminating apparatuses 921 and 922. The illumination apparatus 921 is provided with a white light source 921a obliquely illuminating the detected surface C1 from the side of the reverse transfer direction M', and a red filter 921b. Further, the illumination apparatus 922 is provided with a white light source 922a obliquely illuminating from the side of the vertically crossing direction N, and a blue filter 922b. That is, a red light R1 and a blue light B1 are irradiated onto the detected surface C1 as shown in FIG. 12B. In this case, by respectively setting the light sources 921a and 922a to red and blue light sources in place of the white light sources, the filters 921b and 922b may be omitted.

The imaging portion 930 is, as shown in FIG. 13A, provided with a CCD imaging sensor (an imaging device) 931 in which a scanning direction thereof is set to the vertically crossing direction N. In this case, a two-dimensional image can be obtained by transferring the sheet C in the transfer direction M by the transfer mechanism 950 and repeatedly scanning in the vertically crossing direction N by the CCD line sensor 931. Further, the CCD line sensor 931 is structured such that two kinds of pixels comprising a pixels 931a reacting to the color red and a pixels 931b reacting to the color blue are alternately arranged.

The image-processing portion 940 has a function of processing the two-dimensional image obtained by the CCD line sensor 931, judging an existence and a shape of the pattern P on the detected surface C1, comparing with a shape of the previously stored pattern P, and judging whether or not it is good.

The transfer mechanism 950 is, as shown in FIG. 14A, provided with a drum 951 arranged between a supply portion (not shown) supplying the sheet C and a discharge portion (not shown) discharging the sheet C. The sheet C is supplied so as to be wound around the drum 951 in a circular arc shape, whereby the sheet C is bent and transferred. Further, it is set so that a position at which the sheet C bends becomes a test area D. Accordingly, even in the case that the illumination portion 920 and the detected surface C1 has a fixed angle θ, the illumination portion 920 and the sheet C do not interfere with each other.

A description will be given of a testing method executed by the pattern detecting apparatus 910 structured in the manner mentioned above. That is, the sheet C is transferred to the test area D by the transfer mechanism 950. The sheet C reaching the test area D is bent in an upward convex shape by the drum 951. The red light R1 and the blue light B1 are respectively irradiated onto the detected surface C1 of the sheet C at the incident angle θ by the illumination apparatus 921 and the illumination apparatus 922.

FIGS. 15, 16A to 16C and 17A to 17D are schematic views showing a test principle of the pattern testing apparatus 910. That is, the red light R1 is irradiated from the illumination apparatus 21 and the blue light B1 is irradiated from the illumination apparatus 922, whereby the shadow is generated in the opposite side in the irradiating direction of the convex portion T on the test area D of the sheet C. That is, a shadow S1 corresponding to a portion formed along the vertically crossing direction N and a shadow S2 corresponding to a portion formed along the transfer direction M are respectively generated in the base portion U with respect to the red light R1 and the blue light B1. At this time, lengths of the shadows S1 and S2 are determined on the basis of the incident angle θ of the irradiated red light R1 and the blue light B1, and a height Ht of the convex portion T.

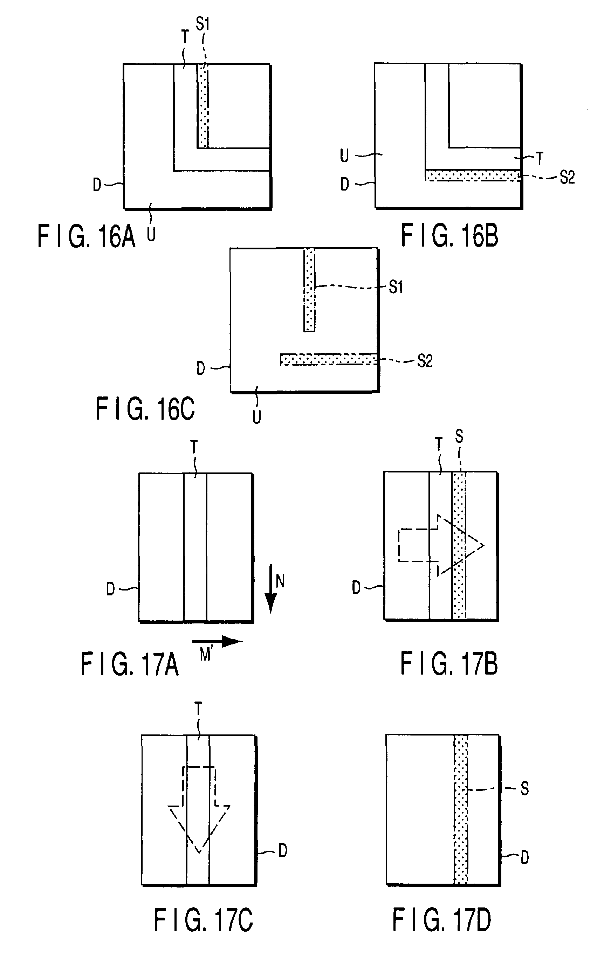

On the contrary, by imaging the test area D from the above in the imaging portion 930, two kinds of images can be obtained. A first image is an image generated by a pixels having a sensitivity to the color red, that is, an image in which the convex portion T of the pattern P and the shadow S1 thereof are dark and the other portions are bright, as shown in FIG. 16A. A second image is an image generated by a pixels having a sensitivity to the color blue, that is, an image in which the convex portion T of the pattern P and the shadow S2 thereof are dark and the other portions are bright, as shown in FIG. 16B. These two kinds of images are fed to the image-processing portion 940.

In the image-processing portion 940, the image is processed on the basis of the first and second images, and an image of difference is obtained. In the image of difference, as shown in FIG. 16C, the deep color portion in the convex portion T of the pattern P is canceled, and an image only of the shadows S1 and S2 of the pattern P can be obtained. Accordingly, it is possible to calculate the existence of the convex portion T and the height Ht thereof by calculating the existence of the shadows S1 and S2 and the lengths thereof.

As mentioned above, in the pattern testing apparatus 910, in the case that the pattern P extends in the vertically crossing direction N as shown in FIG. 17A, the shadow S is generated in the reflection image of the test area D caused by the red light from the reverse transfer direction M' as shown in FIG. 17B, and no shadow is generated in the reflection image of the test area D caused by the blue light from the vertically crossing direction N as shown in FIG. 17C. Accordingly, as shown in FIG. 17D, it is possible to pick out only the shadow S in the image obtained by picking up the difference of the reflection image, and it is possible to detect the pattern P.

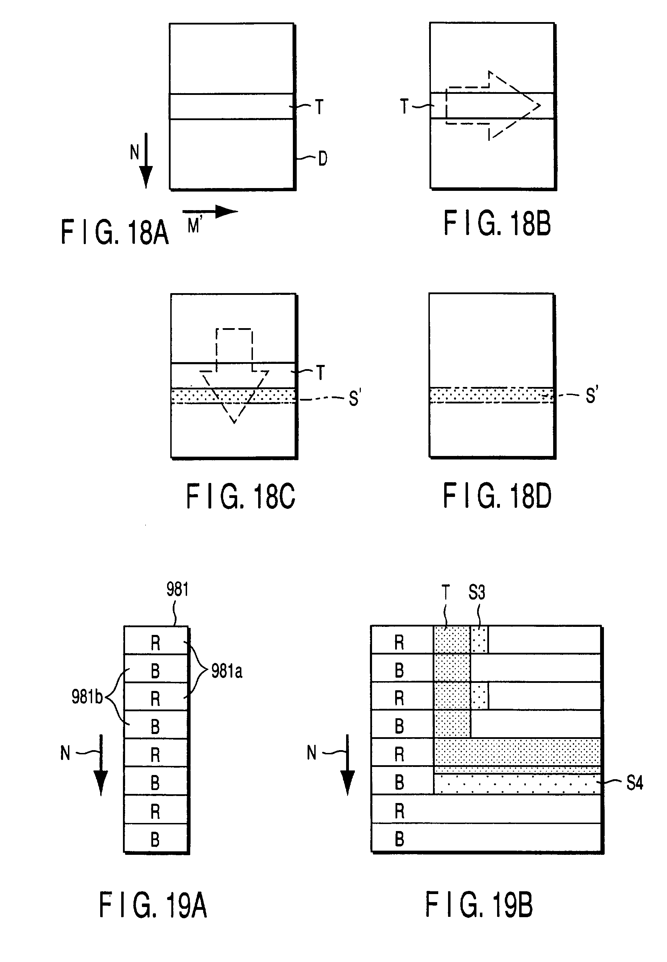

On the contrary, in the case that the pattern P extends in the transfer direction M as shown in FIG. 18A, the shadow S is not generated in the reflection image of the test area D caused by the red light from the reverse transfer direction M' as shown in FIG. 18B, and the shadow S' is generated in the reflection image of the test area D caused by the blue light from the vertically crossing direction N as shown in FIG. 18C. Accordingly, as shown in FIG. 18D, it is possible to pick out only the shadow S' in the image obtained by picking up the difference of the reflection image, and it is possible to detect the pattern P.

That is, in accordance with the pattern detecting apparatus 910, it is possible to detect the existence of the pattern P and the height thereof whichever direction of the extending direction of the convex portion T of the pattern P.

As mentioned above, in accordance with the pattern testing apparatus 910 of the first embodiment, it is possible to detect the pattern P by a simple structure without relation to the shape of the pattern P. Further, since the sheet C is bent at the position of the test area D, it is possible to set the incident angle of the illumination light from the illumination apparatuses 921 and 922 to the test area D to be sufficiently large, and it is possible to stably transfer the sheet C, so that it is possible to detect with a high accuracy.

FIG. 13B is a view showing a first modified example of the imaging portion 930 assembled in the pattern detecting apparatus 10 in accordance with the first embodiment mentioned above. That is, in place of the CCD line sensor 931 in which the pixels are provided in one line, a CCD line sensor 932 in which the pixels are provide in two lines may be employed. In the CCD line sensor 932, there are formed a pixels line 932a in which the pixels corresponding to the color red are arranged at a predetermined pitch p, and a pixels line 932b in which the pixels corresponding to the color blue are arranged at a predetermined pitch p. In this case, since the pitch p of each of the pixels can be reduced, it is possible to execute the test with a higher accuracy in comparison with the case of using the CCD line sensor 931.

In this case, in the CCD line sensor 932, in order to image the same test area D, it is necessary to correct an interval d between the pixels lines 932a and 932b. Accordingly, in the case of setting the transfer speed of the sheet C to V, it is possible to image the same test area D by delaying the pick-up of the image at a time δ.

In addition, in place of the CCD line sensor, for example, a CCD area image sensor may be employed. In this case, it is possible to pick up the image by imaging the test area D.

FIG. 14B is a view showing a transfer mechanism 952 in accordance with a modified example of the transfer mechanism 950 assembled in the pattern detecting apparatus 10 in accordance with the first embodiment mentioned above. The transfer mechanism 952 may be structured such that the sheet C is bent by a belt transfer path 952a and a roller 952b.

### (Sixth embodiment)

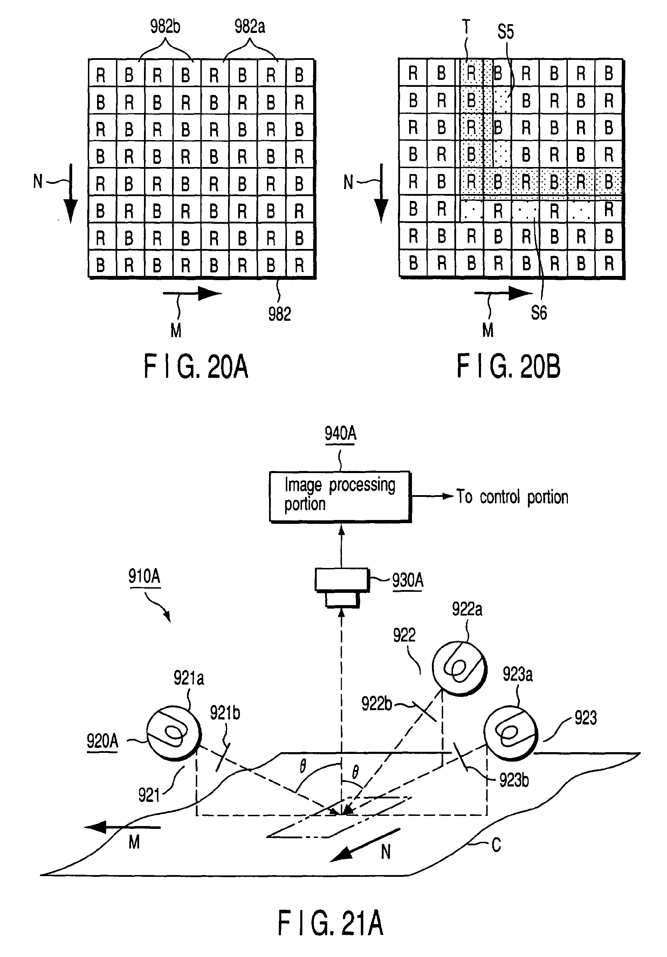

FIGS. 19A, 19B, 20A and 20B are schematic views showing a detection principle of a pattern detecting apparatus 910A in accordance with a second embodiment of the present invention. In the present pattern detecting apparatus 910A, an imaging portion 980 is used in place of the imaging portion 930. That is, in the imaging portion 930, the CCD line sensor and the CCD area-imaging sensor which can identify the color are used, however, in the imaging portion 980, color filters 981 and 982 and a monochrome sensor are used.

The color filter 981 as shown in FIG. 19A is structured such that red (R) and blue (B) small filters 981a and 981b are alternately arranged along the vertically crossing direction N. In the case of using the color filter 981 mentioned above, the reflection image of the test area D generated by the red light R1 passes through the small filter 981a and forms a convex portion T and a shadow S3. On the contrary, the reflection image of the test area D generated by the blue light B1 passes through the small filter 981b and forms the convex portion T and a shadow S4. That is, while the convex portion T can be detected by the monochrome sensor on both images, a shadow is detected or not detected in correspondence to the direction of the irradiation light in each of the small filters 981a and 981b.

By picking up the difference of these two images, an image as shown in FIG. 19B can be formed. Accordingly, it is possible to detect the pattern P. In this case, it is not necessary that the size of the small filters 981a and 981b correspond to the pixels of the monochrome sensor one for one, and a plurality of pixels may correspond to one small filter.

The color filter 982 as shown in FIG. 20A is structured such that red (R) and blue (B) small filters 982a and 982b are alternately arranged along the vertically crossing direction N and the transfer direction M so as to form a block. In the case of using the color filter 982 mentioned above, the reflection image of the test area D generated by the red light R1 passes through the small filter 982a and forms a convex portion T and a shadow S5. On the contrary, the reflection image of the test area D generated by the blue light B1 passes through the small filter 981b and forms the convex portion T and a shadow S6. That is, while the convex portion T can be detected by the monochrome sensor on both images, a shadow is detected or not detected in correspondence to the direction of the irradiation light in each of the small filters 982a and 982b.

By obtaining the difference between these two images, an image as shown in FIG. 20B can be formed. Accordingly, it is possible to detect the pattern P.

### (Sixth embodiment)

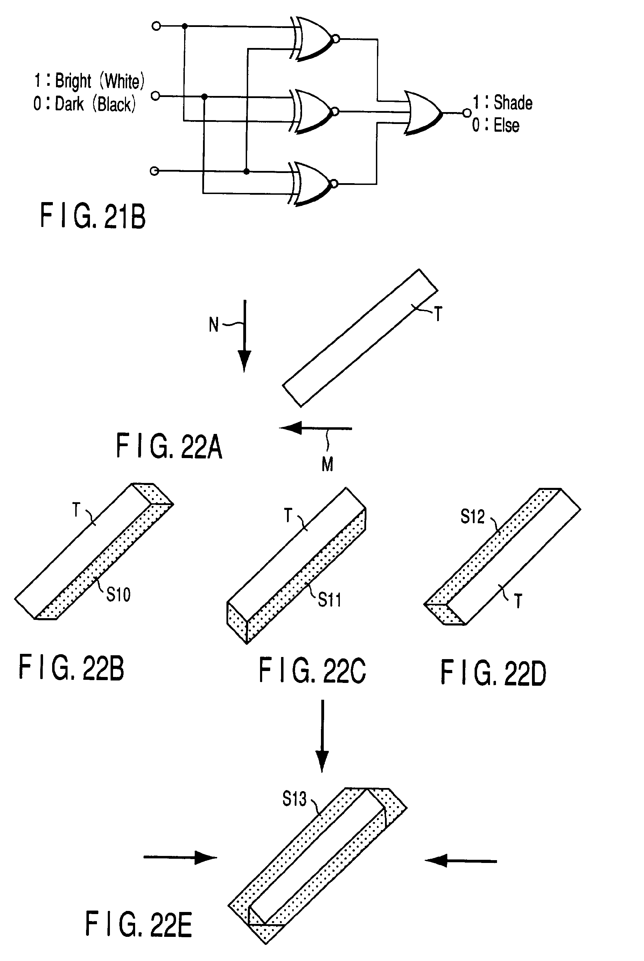

FIG. 21A is a view showing a structure of a main portion of a pattern testing apparatus 910A in accordance with a third embodiment of the present invention. In FIG. 21, the same reference numerals are attached to the same functional portions as those in FIGS. 11 and 12, and a detailed description will be omitted.

The pattern testing apparatus 910A is provided with an illumination portion 920A in place of the illumination portion 920 of the pattern testing apparatus 910 mentioned above, an imaging portion 930A in place of the imaging portion 930, and an image processing portion 940A in place of the image processing portion 940.

The illumination portion 920A is provided with an illumination apparatus 923 in addition to the illumination apparatuses 921 and 922. The illumination apparatus 923 is provided with a white light source 923a obliquely illuminating to the detected surface C1 from the side of the transfer direction M, and a green filter 923b.

In the CCD line sensor of the imaging portion 930A, three kinds of pixels comprising a pixels reacting to the color red, a pixels reacting to the color blue and a pixels reacting to the color green are alternately arranged along the vertically crossing direction N.

In the image processing portion 940A, an image signal to which color separation is applied by a logic circuit shown in FIG. 21B is processed so that the difference between all the images can be obtained.

A description will be given of a testing method executed by the pattern testing apparatus 910A structured in the manner mentioned above. In this case, a convex portion T extends in a direction shifted at 45 degrees with respect to both the transfer direction M and the vertically crossing direction N as shown in FIG. 22A. That is, the sheet C is transferred to the test area D by the transfer mechanism. In the test area D, a red light R1, a blue light B1 and a green light G1 are respectively irradiated on the detected surface C1 of the sheet C by the illumination apparatuses 921 to 923.

On the contrary, three kinds of images can be obtained in the imaging portion 930A. A first image is an image generated by a pixels having a sensitivity to the color red, as shown in FIG. 22B, that is, a convex portion T of the pattern P and a shadow S10 thereof are obtained. A second image is an image generated by a pixels having a sensitivity to the color blue, as shown in FIG. 22C, that is, the convex portion T of the pattern P and a shadow S11 thereof are obtained. A third image is an image generated by a pixels having a sensitivity to the color green, as shown in FIG. 22D, that is, the convex portion T of the pattern P and a shadow S12 thereof are obtained. By processing the difference between the three kinds of images by the image processing portion 940A, an image shown in FIG. 22E, that is, the convex portion T is cancelled, whereby the image of only the shadow S13 can be obtained. Accordingly, it is possible to calculate the existence of the convex portion T and the height thereof.

As mentioned above, in accordance with the pattern testing apparatus 910A of the third embodiment, it is possible to effectively pick out a shadow even with respect to the pattern in an oblique direction which cannot be detected in the case of using two illumination apparatuses 921 and 922 of the concavity and convexity patter testing apparatus 910 in accordance with the first embodiment, and it is possible to detect the pattern P.

In this case, the present invention is not limited to the fifth and sixth embodiments mentioned above. That is, in the pattern detecting apparatus in accordance with the embodiment mentioned above, the sheet is bent, however, it is possible to detect even when the sheet is flat. Further, the method of bending and transferring the sheet may be applied to the other detecting and measuring methods than the pattern detecting apparatus. In addition, it is of course possible that the present invention can be variously modified and applied within the scope of the present invention.

## Claims

1. A pattern (Q) detecting apparatus (100) detecting whether or not a pattern exists on a detected surface, **characterized by** comprising:
illumination device (200) which irradiates an irradiation light to a plurality of irradiation areas separated from the detected surface (W), the irradiation light being irradiated to adjacent irradiation areas (Wa, Wb) from different directions;
imaging device (400) which images the irradiation areas (Wa, Wb) with a mask (320) having a predetermined pattern (Q); and
image processing device (500) which detects a concentration change of a moire image obtained by the imaging device (400), detects a phase difference of the concentration change of the moire image in the adjacent irradiation areas (Wa, Wb), and judges whether or not the pattern (Q) exists.

2. A pattern (Q) detecting apparatus (100) according to claim 1, **characterized in that** the pattern (Q) has a fixed pitch, a pattern of the mask (320) has a fixed pitch, and the pitch is set to be equal to or more than 0.75 times the pitch of the mask of the pattern and equal to or less than 1.25 times thereof.

3. A pattern (Q) detecting apparatus (100) detecting whether or not a pattern exists on a detected surface, **characterized by** comprising:
illumination device (200) which irradiates an irradiation light to a plurality of irradiation areas separated from the detected surface (W), the irradiation light being irradiated to adjacent irradiation areas (Wa, Wb) from different directions;
imaging device (400) which images the irradiation areas by a plurality of pixels having a predetermined pixels pitch; and
image processing device (500) which detects a concentration change of a moire image obtained by the imaging device (400), detects a phase difference of the concentration change of the moire image in the adjacent irradiation areas (Wa, Wb), and judges whether or not the pattern (Q) exists.

4. A pattern (Q) detecting apparatus (100) according to claim 3, **characterized in that** the pattern (Q) has a fixed pitch in a predetermined direction, and the pixels pitch is equal to or more than 0.375 times the pitch of the pattern in the predetermined direction and equal to or less than 0.625 times thereof.

5. A pattern (Q) detecting apparatus (600) detecting whether or not a pattern (Q) provided on a detected surface (W) of a tested body exists, **characterized by** comprising:
illumination device (200) which irradiates an irradiation light to a plurality of irradiation areas separated from the detected surface (W), the irradiation light being irradiated to adjacent irradiation areas (Wa, Wb) from different directions;
imaging device (400) which sequentially inputs an image of a line-shaped imaging area at a predetermined resolution, the line shaped imaging area crossing to a predetermined transfer direction in which the detected surface (W) is transferred; and
image processing device (500) which detects a concentration change of a moire image obtained by the imaging device (400), detects a phase difference of the concentration change of the moire image in the adjacent irradiation areas (Wa, Wb), and judges whether or not the pattern exists.

6. A pattern (Q) detecting apparatus (600) according to claim 5,
**characterized in that** the pattern (Q) has a fixed pitch with respect to the predetermined transfer direction, and the resolution is set to be equal to or more than 0.375 times the pitch of the pattern and equal to or less than 0.625 times thereof.

7. A pattern (Q) detecting apparatus (910) detecting a pattern on a detected surface of a subject, **characterized by** comprising:
illuminating device (920) which irradiates a predetermined number of illumination lights having different properties to the detected surface from different directions;
color separation image pick-up device which provides with an imaging device (930) and a filter (921b, 922b) arranged on an optical path of a reflected light being reflected from the detected surface (D), separates the reflected light into small areas, corresponds to a light emitting wavelength and transmits different light emitting wavelengths in adjacent small areas respectively, and applies a color separation to the reflected light from the detected surface (D) so as to respectively pick up a predetermined number of images; and
Image-processing device (960) which judges an existence of the pattern (Q) or a height thereof on the basis of a difference image between the predetermined images obtained by the color separation image pick-up device.

8. A pattern (Q) detecting apparatus (910) according to claim 7, **characterized by** further comprising a transferring device (950) which transfers the subject in a predetermined transfer direction,
wherein the color separation image pick-up device is provided with a one-dimensional imaging device (931, 932) in which pixels are arranged in a line shape along a scanning direction crossing to the transfer direction.

9. A pattern (Q) detecting apparatus detecting a pattern on a detected surface of a subject, **characterized by** comprising:
illuminating device (920) which irradiates a predetermined number of illumination light having different properties to the detected surface from different directions;
color separation image pick-up device provided with an imaging device (930) separating an reflected light into wavelengths corresponding to light emitting properties so as to pick up respectively, and applying a color separation to the reflected light from the detected surface so as to respectively pick up a predetermined number of images; and
Image-processing device (960) which judges an existence of the pattern or a height thereof on the basis of a difference image between the predetermined images obtained by the color separation image pick-up device.

10. A pattern (Q) detecting apparatus (910) according to claim 9, **characterized by** further comprising a transferring device (950) which transfers the subject in a predetermined transfer direction,
wherein the color separation image pick-up device is provided with a one-dimensional imaging device (931, 932) in which pixels are arranged in a line shape along a scanning direction crossing the transfer direction.

11. A pattern (Q) detecting apparatus according (910) to claim 10,
**characterized in that** the one-dimensional imaging device (931, 932) is provided with a predetermined number of imaging pixels lines in which pixels corresponding to the properties of the illumination light are arranged along the scanning direction, and
reading position-correcting device which corrects a reading position displacement on the basis of a distance between the respective imaging pixels lines.

12. A pattern (Q) detecting apparatus (910) according to claim 10,
**characterized in that** the one-dimensional imaging device (931, 932) is provided with a predetermined number of imaging pixels lines in which pixels corresponding to the properties of the illumination light are arranged along the scanning direction, and
the color separation image pick-up device is provided with a color arraying device which arrays color arrangements of electric signal patterns obtained by the imaging pixels lines in electric signal patterns separated color by color.

13. A pattern (Q) detecting apparatus (910) according to claim 7, **characterized in that** the predetermined number is two and the different direction is two directions crossing each other.

14. A pattern (Q) detecting apparatus (910A) according to claim 7, **characterized in that** the predetermined number is three and the different direction is two directions crossing each other and one direction crossing these two directions.

15. A pattern (Q) detecting apparatus (910) according to claim 7, **characterized by** further comprising a judging device which judges a quality of the subject on the basis of a shape of the pattern detected by the image processing device.

16. A pattern (Q) detecting apparatus according to claim 7, **characterized by** further comprising a transfer device (950) which transfers the subject (C) in a predetermined transfer direction, and a bending device (951) which bends the subject (C) around an axis in a direction crossing the transfer direction so as to change the transfer direction.

17. A pattern (Q) detecting apparatus (910) according to claim 7, **characterized by** further comprising a transfer device which transfers the subject (C) in a transfer direction along the detected surface, and a bending device (951) which bends the subject around an axis in a direction crossing the transfer direction so as to change the transfer direction.

18. A pattern (Q) testing apparatus (910) according to claim 9, **characterized by** further comprising a transfer device (950) which transfers the subject (C) in a transfer direction along the detected surface, and a bending device (951) which bends the subject (C) around an axis in a direction crossing the transfer direction so as to change the transfer direction.

19. A pattern (Q) testing apparatus (910) according to claim 17, **characterized by** further comprising
illuminating device (920) which irradiates an illumination light from an oblique direction of the detected surface of the subject, and an imaging device (930) which inputs an image of reflected light from the detected surface.

20. A pattern testing (Q) apparatus (910) according to claim 18, **characterized by** further comprising
illuminating device (920) which irradiates illumination light from an oblique direction of the detected surface (D) of the subject (C), and an imaging device (930) for inputs an image of reflected light from the detected surface (D).
